# EUROPEAN PATENT SPECIFICATION

(11) **EP 0 379 260 B1**
(45) Date of publication and mention of the grant of the patent: **03.05.1995**
(21) Application number: 90200120.5
(22) Date of filing: 16.01.1990
(51) Int. Cl.: C08G 67/02, C08F 4/80

(54) **Catalyst compositions**
Katalysator-Zusammensetzungen
Compositions de catalyseurs

(30) Priority: 20.01.1989 NL 8900139
(43) Date of publication of application: 25.07.1990
(73) Proprietor: SHELL INTERNATIONALE RESEARCH MAATSCHAPPIJ B.V., 2596 HR Den Haag (NL)
(72) Inventor: van Leeuwen, Petrus Wilhelmus Nicolaas Maria, NL-1031 CM Amsterdam (NL); Roobeek, Cornelis Franciscus, NL-1031 CM Amsterdam (NL)

(56) References cited:
- EP-A- 0 222 454
- EP-A- 0 294 000

## Description

The invention relates to novel compositions based upon a Group VIII metal and a diphosphine, which can be suitably used as catalysts in the preparation of polymers of carbon monoxide with one or more olefinically unsaturated compounds.

It is known that linear polymers of carbon monoxide with one or more olefinically unsaturated compounds, in which the units originating in carbon monoxide on the one hand, and the units originating in the applied olefinically unsaturated compounds on the other hand, occur in alternating order, can be prepared by contacting the monomers at an elevated temperature and pressure with a catalyst composition on the basis of
a) a Group VIII metal and
b) a diphosphine of the general formula R¹R²P-R-PR³R⁴, wherein R¹, R², R³ and R⁴ are identical or different optionally polar-substituted hydrocarbyl groups and R is a bivalent organic bridging group containing at least two carbon atoms in the bridge.

In an investigation carried out by the Applicant into these catalyst compositions, it was found that their activity for polymerizing carbon monoxide with one or more olefinically unsaturated compounds can be much enhanced by including therein as a component c), a monophosphine of the general formula R⁵R⁶R⁷P or a monophosphine oxide of the general formula R⁵R⁶HPO, in a quantity of from 0.25 to 2 mol per mol of Group VIII metal; R⁵ and R⁶ in the general formulae are identical or different optionally polar-substituted hydrocarbyl groups and R⁷ is hydrogen or an optionally polar-substituted hydrocarbyl group.

Catalyst compositions on the basis of components a) and b) which include a component c) in the afore-mentioned quantity are novel.

The present patent application therefore relates to novel catalyst compositions based upon a Group VIII metal and a diphosphine characterized in that they are based upon
a) a Group VIII metal,
b) a diphosphine of the general formula R¹R²P-R-PR³R⁴, and
c) 0.25 to 2 mol per mol of Group VIII metal of a monophosphine of the general formula R⁵R⁶R⁷P or of a monophosphine oxide of the general formula R⁵R⁶HPO, in which general formulae R¹, R², R³, R⁴, R⁵ and R⁶ are identical or different optionally polar-substituted hydrocarbyl groups, R⁷ is hydrogen or an optionally polar-substituted hydrocarbyl group and R is a bivalent organic bridging group containing at least two carbon atoms in the bridge.

The patent application further relates to the application of these catalyst compositions in the preparation of polymers of carbon monoxide with one or more olefinically unsaturated compounds.

In the present patent application, Group VIII metals should be taken to be the noble metals ruthenium, rhodium, palladium, osmium, iridium and platinum, and the iron group metals iron, cobalt and nickel.

In the catalyst compositions of the invention, the preferred Group VIII metal is chosen from palladium, nickel and cobalt. Special preference is given to palladium as Group VIII metal.

By preference, the Group VIII metal is taken up in the catalyst composition in the form of a salt. Very suitable for the purpose are salts of hydrohalogenic acids, such as hydrochloric acid, salts of sulphonic acids with a pKa of less than 2, such as para-toluene-sulphonic acid and salts of carboxylic acids with a pKa of more than 4, such as acetic acid. If the Group VIII metal is taken up in the catalyst composition in the form of a salt of a carboxylic acid with a pKa of more than 4, then it is preferred to include also an acid with a pKa of less than 2, such as para-toluene-sulphonic acid or trifluoroacetic acid, in the catalyst composition, in a quantity of from 0.5 to 50 and in particular of from 1 to 25 mol per mol of Group VIII metal.

In the diphosphines of the general formula R¹R²P-R-PR³R⁴, the groups R¹, R², R³ and R⁴ are preferably identical. Diphosphines in which the groups R¹, R², R³ and R⁴ are unsubstituted phenyl groups and diphosphines in which the groups R¹, R², R³ and R⁴ are phenyl groups containing one or more alkoxy substituents at least one of which is situated in a position ortho to the phosphorus atom to which the phenyl group is bound can very suitably be taken up in the catalyst compositions of the invention. Bridging group R which is present in the diphosphines preferably contains three atoms in the bridge. Examples of suitable bridging groups R are the -CH₂-CH₂-CH₂- group, the -CH₂-C(CH₃)₂-CH₂- group and the -CH₂-Si(CH₃)₂-CH₂-group. The quantity of diphosphine present in the catalyst compositions is preferably from 0.5 to 1.5 and in particular from 0.75 to 1.25 mol per mol of Group VIII metal.

In the monophosphines of the general formula R⁵R⁶R⁷P, the groups R⁵, R⁶ and R⁷ are preferably identical hydrocarbyl groups. Examples of suitable hydrocarbyl groups are aryl groups, such as phenyl groups and alkyl groups, such as n-butyl groups. For the monophosphine oxides of the general formula R⁵R⁶HPO it also holds that the groups R⁵ and R⁶ present therein are preferably hydrocarbyl groups that are identical with one another. An example of a monophosphine oxide suitable for use in the present catalyst compositions is diphenylphosphine oxide. The quantity of monophosphine or monophosphine oxide taken up in the catalyst compositions preferably amounts to 0.75 to 1.25 mol per mol of Group VIII metal.

In order to enhance the activities of the catalyst compositions, a 1,4-quinone may further be incorporated. 1,4-Benzoquinones and 1,4-Naphthoquinones are very suitable for the purpose. Preferably, the amount of 1,4-quinone used is 10 to 1000 and in particular 25 to 250 mol per mol of Group VIII metal.

The polymerization by using the catalyst compositions of the invention is preferably performed by contacting the monomers with a solution of the catalyst composition in a diluent in which the polymers are insoluble or virtually insoluble. Diluents that are very suitable are lower alcohols, such as methanol. The polymerization may be carried out in the gaseous phase, if desired. Olefinically unsaturated compounds that can be suitably polymerized with carbon monoxide with the aid of the catalyst compositions of the invention are compounds consisting exclusively of carbon and hydrogen as well as compounds which, in addition to carbon and hydrogen, contain one or more hetero-atoms. The catalyst compositions of the invention are preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1. The catalyst compositions of the invention are particularly suitable for application in the preparation of copolymers of carbon monoxide with ethene and for the preparation of terpolymers of carbon monoxide with ethene and another alpha-olefin, in particular propene.

The quantity of catalyst solution employed in the preparation of the polymers may vary within wide limits. The quantity of catalyst solution used per mol of olefinically unsaturated compound to be polymerized preferably contains from 10⁻⁷ to 10⁻³ and in particular from 10⁻⁶ to 10⁻⁴ mol of Group VIII metal.

The preparation of the polymers is preferably carried out at a temperature of 50-150°C and a pressure of 20-150 bar and in particular at a temperature of 75-125°C and a pressure of 30-100 bar. The molar ratio of the olefinically unsaturated compounds relative to carbon monoxide in the mixture to be polymerized is preferably 10:1-1:10 and in particular 5:1-1:5.

The invention will now be illustrated with the aid of the following examples.

### Example 1

A carbon monoxide/ethene copolymer was prepared as follows. A stirred autoclave with a capacity of 250 ml was charged with a catalyst solution comprising 100 ml methanol and a complex of 0.1 mmol palladium dichloride and 0.1 mmol 1,3-bis[bis(2-methoxyphenyl)phosphino]-propane.

After any air present in the autoclave had been removed by evacuation, a 1:1 carbon monoxide/ethene mixture was blown in until a pressure of 40 bar was reached. Then, the contents of the autoclave were brought to a temperature of 110°C. Polymerization was terminated after 2 hours, by cooling to room temperature and releasing the pressure. The prepared polymer was filtered off, washed with methanol and dried in vacuo at room temperature.

3.5 g of copolymer was obtained. The polymerization rate was 165 g copolymer/g palladium.hour.

### Example 2

A carbon monoxide/ethene copolymer was prepared substantially in the same way as the copolymer of Example 1, except that now the catalyst solution also included 0.1 mmol triphenylphosphine.

7.5 g of copolymer was obtained. The polymerization rate was 350 g copolymer/g palladium.hour.

### Example 3

A carbon monoxide/ethene copolymer was prepared substantially in the same way as the copolymer of Example 1, except that the palladium complex in the catalyst solution comprised 0.1 mmol of 1,3-bis(diphenylphosphino)propane instead of 1,3-bis[bis(2-methoxyphenyl)phosphino]propane.

1.5 g of copolymer was obtained. The polymerization rate was 70 g copolymer/g palladium.hour.

### Example 4

A carbon monoxide/ethene copolymer was prepared substantially in the same way as the copolymer of Example 3, except for the following differences
a) the catalyst solution also included 0.1 mmol of diphenylphosphine oxide,
b) the reaction time was 1 hour instead of 2 hours.

2.5 g of copolymer was obtained. The polymerization rate was 235 g copolymer/g palladium.hour.

### Example 5

A carbon monoxide/ethene copolymer was prepared substantially in the same way as the copolymer of Example 1, except for the following differences
a) as palladium complex, the catalyst solution also included a complex of 0.1 mmol of palladiumdi(paratosylate) and 0.1 mmol 1,3-bis(diphenylphosphino)propane,
b) the reaction temperature was 95°C instead of 110°C, and
c) the reaction time was 30 minutes instead of 2 hours.

6.5 g of copolymer was obtained. The polymerization rate was 1220 g copolymer/g palladium.hour.

### Example 6

A carbon monoxide/ethene copolymer was prepared substantially in the same way as the copolymer of Example 5, except that now the catalyst solution also included 0.1 mmol triphenylphosphine.

12 g of copolymer was obtained. The polymerization rate was 2250 g copolymer/g palladium.hour.

### Example 7

A carbon monoxide/ethene copolymer was prepared substantially in the same way as the copolymer of Example 1, except for the following differences
a) the catalyst solution used comprised
   100 ml methanol,
   0.1 mmol palladium diacetate,
   0.1 mmol 1,3-bis(diphenylphosphino)propane,
   0.1 mmol tri(n-butyl)phosphine, and
   2.0 mmol trifluoroacetic acid,
b) the reaction temperature was 90°C instead of 110°C, and
c) the reaction time was 30 minutes instead of 2 hours.

9.3 g of copolymer was obtained. The polymerization rate was 1745 g copolymer/g palladium.hour.

### Example 8

A carbon monoxide/ethene copolymer was prepared substantially in the same way as the copolymer of Example 1, except for the following differences
a) the catalyst solution used comprised
   100 ml methanol,
   0.1 mmol palladium diacetate,
   0.1 mmol 1,3-bis(diphenylphosphino)propane,
   0.1 mmol tri(n-butyl)phosphine oxide, and
   2.0 mmol trifluoroacetic acid,
b) the reaction temperature was 90°C instead of 110°C, and
c) the reaction time was 40 minutes instead of 2 hours.

13.3 g of copolymer was obtained. The polymerization rate 1870 g copolymer/g palladium.hour.

Of Examples 1-8, Examples 2, 4 and 6-8 are examples in accordance with the invention. In these examples, catalyst compositions were employed which, in addition to a Group VIII metal, included a diphosphine, a monophosphine or a monophosphine oxide. Examples 1, 3 and 5, in which catalyst compositions were employed which contained no monophosphine or monophosphine oxide, fall outside the scope of the invention and have been included in the patent application for comparison. The increase in activity which occurs when a monophosphine or a monophosphine oxide is included in a catalyst composition which contains a Group VIII metal and a diphosphine is clearly demonstrated by the comparison of the polymerization rates obtained in Examples 1, 3 and 5 with those obtained in Examples 2, 4 and 6, respectively.

With the aid of ¹³C-NMR analysis it was established that the carbon monoxide/ethene copolymers prepared by Examples 1-8 had a linear structure and that the units originating in carbon monoxide on the one hand and the units originating in ethene on the other hand, occurred in alternating order.

## Claims

1. Catalyst compositions based upon a Group VIII metal and a diphosphine, characterized in that they are based upon
a) a Group VIII metal,
b) a diphosphine of the general formula R¹R²P-R-PR³R⁴, and
c) 0.25 to 2 mol per mol of Group VIII metal of a monophosphine of the general formula R⁵R⁶R⁷P or of a monophosphine oxide of the general formula R⁵R⁶HPO, in which general formulae R¹, R², R³, R⁴, R⁵ and R⁶ are identical or different optionally polar-substituted hydrocarbyl groups, R⁷ is hydrogen or an optionally polar-substituted hydrocarbyl group and R is a bivalent organic bridging group containing at least two carbon atoms in the bridge.

2. Catalyst compositions as claimed in claim 1, characterized in that they include palladium as the Group VIII metal.

3. Catalyst compositions as claimed in claim 1 or 2, characterized in that the Group VIII metal is incorporated therein in the form of a salt.

4. Catalyst compositions as claimed in one or more of claims 1-3, characterized in that they include a diphosphine in which the groups R¹, R², R³ and R⁴ are either unsubstituted phenyl groups, or phenyl groups which contain one or more alkoxy groups at least one of which is situated in a position ortho in respect to the phosphorus atom to which the phenyl group is linked.

5. Catalyst compositions as claimed in one or more of claims 1-4, characterized in that they include the diphosphine in a quantity of from 0.5 to 1.5 mol per mol of Group VIII metal.

6. Catalyst compositions as claimed in one or more of claims 1-5, characterized in that they include a monophosphine in which the groups R⁵, R⁶ and R⁷ are identical hydrocarbyl groups.

7. Catalyst compositions as claimed in claim 6, characterized in that they include a monophosphine in which the groups R⁵, R⁶ and R⁷ are aryl groups, such as phenyl groups, or alkyl groups, such as n-butyl groups.

8. Catalyst compositions as claimed in one or more of claims 1-7, characterized in that they include a monophosphine oxide in which the groups R⁵ and R⁶ are identical hydrocarbyl groups, such as phenyl groups.

9. Process for the preparation of polymers of carbon monoxide and one or more olefinically unsaturated compounds, characterized in that a mixture of carbon monoxide with one or more olefinically unsaturated compounds is contacted at an elevated temperature and pressure with a catalyst composition as claimed in one or more of claims 1-8.

10. Process as claimed in claim 9, characterized in that it is carried out at a temperature of 50-150°C, a pressure of 20-150 bar and a molar ratio of the olefinically unsaturated compounds relative to carbon monoxide in the mixture to be polymerized, of 10:1-1:10, and that per mol of olefinically unsaturated compound to be polymerized, such a quantity of catalyst composition is used as to contain 10⁻⁷-10⁻³ mol of Group VIII metal.

## Patentansprüche

1. Katalysatorzusammensetzungen, die auf einem Metall aus der Gruppe VIII und einem Diphosphin basieren, dadurch gekennzeichnet, daß sie auf folgenden Bestandteilen basieren:
a) ein Metall aus der Gruppe VIII,
b) ein Diphosphin mit der allgemeinen Formel R¹R²P-R-PR³R⁴, und
c) 0,25 bis 2 Mol eines Monophosphins mit der allgemeinen Formel R⁵R⁶R⁷P oder eines Monophosphinoxids mit der allgemeinen Formel R⁵R⁶HPO pro Mol an Metall aus der Gruppe VIII, in welchen allgemeinen Formeln R¹, R², R³, R⁴, R⁵ und R⁶ identische oder verschiedene, wahlweise mit einem polaren Rest substituierte Kohlenwasserstoffgruppen darstellen, R⁷ Wasserstoff oder eine wahlweise mit einem polaren Rest substituierte Kohlenwasserstoffgruppe ist und R eine zweiwertige organische Brückengruppe darstellt, die mindestens zwei Kohlenstoffatome in der Brücke enthält.

2. Katalysatorzusammensetzungen wie in Anspruch 1 beansprucht, dadurch gekennzeichnet, daß sie als Metall aus der Gruppe VIII Palladium einschließen.

3. Katalysatorzusammensetzungen wie in Anspruch 1 oder 2 beansprucht, dadurch gekennzeichnet, daß das Metall aus der Gruppe VIII in Form eines Salzes darin eingebaut ist.

4. Katalysatorzusammensetzungen wie in einem oder mehreren der Ansprüche 1 bis 3 beansprucht, dadurch gekennzeichnet, daß sie ein Diphosphin einschließen, in welchem die Gruppen R¹, R², R³, R⁴ entweder unsubstituierte Phenylgruppen sind, oder Phenylgruppen darstellen, welche eine oder mehrere Alkoxygruppen enthalten, von denen mindestens eine sich in ortho-Stellung befindet, bezogen auf das Phosphoratom, mit dem die Phenylgruppe verbunden ist.

5. Katalysatorzusammensetzungen wie in einem oder mehreren der Ansprüche 1 bis 4 beansprucht, dadurch gekennzeichnet, daß sie das Diphosphin in einer Menge von 0,5 bis 1,5 Mol pro Mol Metall aus der Gruppe VIII einschließen.

6. Katalysatorzusammensetzungen wie in einem oder mehreren der Ansprüche 1 bis 5 beansprucht, dadurch gekennzeichnet, daß sie ein Monophosphin einschließen, in welchem die Gruppen R⁵, R⁶ und R⁷ identische Kohlenwasserstoffgruppen sind.

7. Katalysatorzusammensetzungen wie in Anspruch 6 beansprucht, dadurch gekennzeichnet, daß sie ein Monophosphin einschließen, in welchem die Gruppen R⁵, R⁶ und R⁷ Arylgruppen, so wie Phenylgruppen, oder Alkylgruppen, so wie n-Butylgruppen, sind.

8. Katalysatorzusammensetzungen wie in einem oder mehreren der Ansprüche 1 bis 7 beansprucht, dadurch gekennzeichnet, daß sie ein Monophosphinoxid einschließen, in welchem die Gruppen R⁵ und R⁶ identische Kohlenwasserstoffgruppen, so wie Phenylgruppen, sind.

9. Verfahren zur Herstellung von Polymeren aus Kohlenstoffmonoxid und einer oder mehreren olefinisch ungesättigten Verbindung(en), dadurch gekennzeichnet, daß eine Mischung aus Kohlenstoffmonoxid und einer oder mehreren olefinisch ungesättigten Verbindung(en) bei erhöhter Temperatur und erhöhtem Druck mit einer Katalysatorzusammensetzung, wie in einem oder mehreren der Ansprüche 1 bis 8 beansprucht, kontaktiert wird.

10. Verfahren wie in Anspruch 9 beansprucht, dadurch gekennzeichnet, daß es bei einer Temperatur von 50 bis 150 °C, einem Druck von 20 bis 150 bar und einem molaren Verhältnis der olefinisch ungesättigten Verbindungen zum Kohlenstoffmonoxid in der Mischung, die polymerisiert werden soll, von 10:1 bis 1:10 ausgeführt wird, und daß pro Mol der olefinisch ungesättigten Verbindung, welche polymerisiert werden soll, eine solche Menge an Katalysatorzusammensetzung verwendet wird, daß sie 10⁻⁷ bis 10⁻³ Mol an Metall aus der Gruppe VIII enthält.

## Revendications

1. Compositions de catalyseur à base d'un métal du groupe VIII et d'une diphosphine, caractérisées en ce qu'elles sont à base
a) d'un métal du groupe VIII,
b) d'une diphosphine de formule générale R¹R²P-R-PR³R⁴, et
c) de 0,25 à 2 modes par mode du métal du groupe VIII d'une monophosphine de formule générale R⁵R⁶R⁷P ou d'un oxyde de monophosphine de formule générale R⁵R⁶HPO, formules générales dans lesquelles R¹, R², R³, R⁴, R⁵ et R⁶ sont des groupes hydrocarbyde identiques ou différents, éventuellement substitués par un groupe podaire, R⁷ est un atome d'hydrogène ou un groupe hydrocarbyle éventuellement substitué par un groupe polaire et R est un groupe pontant organique divalent contenant au moins deux atomes de carbone dans le pont.

2. Compositions de catalyseur selon la revendication 1, caractérisées en ce qu'elles contiennent du palladium comme métal du groupe VIII.

3. Compositions de catalyseur selon la revendication 1 ou 2, caractérisées en ce que le métal du groupe VIII y est incorporé sous forme de sel.

4. Compositions de catadyseur selon l'une quelconque des revendications 1-3, caractérisées en ce qu'elle contiennent une diphosphine dans laquelle les groupes R¹, R², R³ et R⁴ sont des groupes phényle non substitués ou des groupes phényle qui contiennent un ou plusieurs groupes alcoxy dont l'un au moins est situé en position ortho par rapport à d'atome de phosphore auquel est lié le groupe phényle.

5. Compositions de catalyseur selon d'une quelconque des revendications 1-4, caractérisées en ce qu'elle contiennent la diphosphine en une quantité de 0,5 à 1,5 mode par mode de métal du groupe VIII.

6. Compositions de catalyseur selon l'une quelconque des revendications 1-5, caractérisées en ce qu'elle contiennent une monophosphine dans laquelle les groupes R⁵, R⁶ et R⁷ sont des groupes hydrocarbyle identiques.

7. Compositions de catalyseur selon la revendication 6, caractérisées en ce qu'elles contiennent une monophosphine dans laquelle des groupes R⁵, R⁶ et R⁷ sont des groupes aryle, tels que des groupes phényle, ou des groupes alkyle, tels que des groupes n-butyle.

8. Compositions de catalyseur selon d'une quelconque des revendications 1-7, caractérisées en ce qu'elle contiennent un oxyde de monophosphine dans lequel les groupes R⁵ et R⁶ sont des groupes hydrocarbyle identiques, tels que des groupes phényle.

9. Procédé de préparation de polymères de monoxyde de carbone et d'un ou de plusieurs composés à insaturation oléfinique, caractérisé en ce que l'on met en contact un mélange de monoxyde de carbone avec un ou plusieurs composés à insaturation oléfinique, à une température et sous une pression élevées, avec une composition de catalyseur selon l'une quelconque des revendications 1-8.

10. Procédé selon la revendication 9, caractérisé en ce qu'il est mis en oeuvre à une température de 50-150°C, sous une pression de 20-150 bars et à un rapport molaire des composés à insaturation oléfinique par rapport au monoxyde de carbone dans le mélange à polymériser de 10:1 à 1:10, et en ce que l'on utilise, par mode de composé à insaturation oléfinique, une quantité de composition de catalyseur telle qu'elle contienne 10⁻⁷ à 10⁻³ mole de métal du groupe VIII.
